# EUROPÄISCHE PATENTANMELDUNG

(11) **EP 2 664 388 A2**
(43) Veröffentlichungstag der Anmeldung: **20.11.2013**
(21) Anmeldenummer: 13002182.7
(22) Anmeldetag: 25.04.2013
(51) Int. Cl.: B05B 15/12

(54) **Vorrichtung zum Abscheiden von Overspray sowie Anlage mit einer solchen**

(30) Priorität: 16.05.2012 DE 102012009723
(71) Anmelder: Eisenmann AG, 71032 Böblingen (DE)
(72) Erfinder: Schuster, Werner, D-75365 Calw (DE)
(74) Vertreter: Heinrich, Hanjo

(57) **Zusammenfassung**

Eine Vorrichtung zum Abscheiden von Lack-Overspray aus der mit Overspray beladenen Kabinenabluft von Lackieranlagen umfasst Abscheidemittel, an welchen die Kabinenabluft entlang führbar ist und welche auf dem Potential eines Pols einer Hochspannungsquelle liegen. Eine im Luftstrom angeordnete Elektrodeneinrichtung ist mit dem anderen Pol der Hochspannungsquelle (50) verbunden. Es ist eine Einrichtung (54) vorhanden, mittels welcher wenigstens ein frei fallender Abscheidevorhang (56) aus einem Abscheidematerial (58) erzeugbar ist, der als Abscheidemittel dient und mit der Elektrodeneinrichtung zusammenarbeitet. Außerdem ist eine Anlage zum Beschichten von Gegenständen angegeben, welche eine solche Abscheidevorrichtung (34) umfasst.

## Beschreibung

Die Erfindung betrifft eine Vorrichtung zum Abscheiden von Lack-Overspray aus der mit Overspray beladenen Kabinenabluft von Lackieranlagen mit
a) Abscheidemitteln, an welchen die Kabinenabluft entlang führbar ist und welche auf dem Potential eines Pols einer Hochspannungsquelle liegen;
b) einer im Luftstrom angeordneten Elektrodeneinrichtung, welche mit dem anderen Pol der Hochspannungsquelle verbunden ist.

Außerdem betrifft die Erfindung eine Anlage zum Beschichten von Gegenständen mit
a) einer Beschichtungskabine, in welcher die Gegenstände mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung, welcher diese Kabinenluft zuführbar ist und wo zumindest ein Großteil des Oversprays aus der Kabinenluft abgeschieden wird.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Overspray-Feststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Bei vom Markt her bekannten Vorrichtungen der eingangs genannten Art sind die Abscheidemittel als Abscheidefläche ausgebildet. Durch die Elektrodeneinrichtung werden von der Kabinenabluft mitgeführte Lack-Overspraypartikel ionisiert, welche dann auf Grund des zwischen der Abscheidefläche und der Elektrodeneinrichtung aufgebauten elektrischen Feldes zur Abscheidefläche wandern, an welcher sie sich abscheiden. Die an der Abscheidefläche haftenden Lack-Overspraypartikel können dann beispielsweise mechanisch von dieser abgestreift und abtransportiert werden. Alternativ haben sich Systeme etabliert, bei denen die Abscheidefläche von einem flüssigen Trennmittel überströmt wird, welches den Overspray aufnimmt und abtransportiert.

Besonders letztere Abscheider haben eine äußerst hohe Reinigungswirkung, welche jedoch mit einem nicht unerheblichen baulichen Aufwand besonders im Hinblick auf die Abscheideflächen erkauft wird. Um Spannungsüberschläge zu verhindern, muss das Trennmittel zudem als zusammenhängender Film über die Abscheidefläche fließen, was zu weiteren Erschwernissen führt.

Es ist daher Aufgabe der Erfindung, eine Abscheidevorrichtung und eine Anlage der eingangs genannten Art zu schaffen, welche diesen Gedanken Rechnung tragen.

Diese Aufgabe wird bei der Abscheidevorrichtung der eingangs genannten Art dadurch gelöst, dass
c) eine Einrichtung vorhanden ist, mittels welcher wenigstens ein frei fallender Abscheidevorhang aus einem Abscheidematerial erzeugbar ist, der als Abscheidemittel dient und mit der Elektrodeneinrichtung zusammenarbeitet.

Ein solcher frei fallender Abscheidevorhang benötigt keine Abscheidefläche, an welcher er entlang strömen kann. Somit kann auf die Abscheideflächen verzichtet werden und die Abscheidevorrichtung fällt insgesamt baulich einfacher aus. Zudem wird eine beträchtliche Menge Material gespart, da die Abscheideflächen bei bekannten Abscheidevorrichtungen häufig den größten Materialanteil benötigen. Die Erfindung beruht somit auf der Erkenntnis, dass mit einem frei fallenden Vorhang aus einem Abscheidematerial ein ebenso gutes Reinigungsergebnis erzielt werden kann, wie mit Hilfe von flüssigkeitsüberströmten Abscheideflächen. Wie weiter unten nochmals erläutert wird, kann ein solcher Abscheidevorhang zusammenhängend ausgebildet sein, muss dies jedoch nicht. Die ionisierten Overspraypartikel wandern wegen des vorliegenden elektrischen Feldes zu dem Abscheidevorhang, welcher die Overspraypartikel aufnimmt und auf Grund seiner Strömung abtransportiert.

Es ist günstig, wenn ein oder mehrere Abgabeeinheiten vorhanden sind, über welche das Abscheidematerial jeweils in Form eines Abscheidevorhangs abgebbar ist. Besonders wenn mehrere Abscheidevorhänge erzeugt werden, wird die Effizienz der Abscheidevorrichtung entsprechend erhöht.

Eine technisch günstige Lösung ist gegeben, wenn die eine oder die mehreren Abgabeeinheiten als Abgaberinne ausgebildet sind, welchen das Abgabematerial zuführbar ist.

Eine solche Abgaberinne kann beispielsweise als Überlaufrinne konzipiert sein. Alternativ kann jede Abgaberinne einen Austritts-Längsschlitz und/oder eine Mehrzahl von Austrittslöchern für das Abscheidematerial aufweisen.

Wenn Luftleitbleche vorhanden sind, mittels welchen die Kabinenluft an dem wenigstens einen Abscheidevorhang entlang leitbar sind, ist eine effiziente Abscheidung von Overspray gewährleistet.

Damit möglichst wenig Kabinenluft an dem oder den Abscheidevorhängen vorbei strömen kann, ist es vorteilhaft, wenn die Luftleitbleche weitgehend dem Verlauf der seitlichen Kontur des wenigstens einen Abscheidevorhangs folgen. Bei flüssigen Abscheidevorhängen kann es beispielsweise vorkommen, dass diese auf Grund von Oberflächenspannungen nach unten hin konvergieren, wodurch die Wirkfläche des Abscheidevorhangs nach unten hin abnimmt. Durch entsprechende Luftleitbleche wird die Kabinenluft dennoch effektiv im Bereich des Abscheidevorhangs gehalten.

Die oben angegebene Aufgabe wird bei einer Anlage der eingangs genannten Art dadurch gelöst, dass die Abscheidevorrichtung mit einigen oder allen der oben erläuterten Merkmale ausgebildet ist.

Die Vorteile entsprechen dabei den jeweils oben zur Abscheidevorrichtung erläuterten Vorteilen.

Vorzugsweise sind bei der Anlage eine Mehrzahl von Abscheideeinheiten vorhanden, die jeweils eine Elektrodeneinheit und eine Abgabeeinheit umfassen, wobei die Abscheideeinheiten quer zur Längsrichtung der Beschichtungskabine oder parallel zur Längsrichtung der Beschichtungskabine angeordnet sind. Die Abscheideeinheiten können dann über die gesamte Längserstreckung der Beschichtungskabine angeordnet sein, so dass Kabinenluft aus jedem Abschnitt der Beschichtungskabine effektiv einer Abscheidung zugeführt werden kann.

Wenn die Abscheideeinheiten versetzt zueinander angeordnet sind, wird die Möglichkeit eingeschränkt oder auch ganz beseitigt, dass Kabinenluft in unerwünschter Weise ohne erfolgte Abscheidung von Overspray in seitliche Richtung durch Lücken zwischen den Abscheidevorhängen hindurch strömen kann.

Ausführungsbeispiele der Erfindung werden nachfolgend anhand der Zeichnungen näher erläutert. In diesen zeigen:
- Figur 1: eine Vorderansicht einer Lackierkabine einer Oberflächenbehandlungsanlage mit einer Overspray-Abscheidevorrichtung gemäß einem ersten Ausführungsbeispiel, bei welchem Abscheideeinheiten quer zur Lackierkabine angeordnet sind;
- Figur 2: einen Abschnitt der Lackierkabine nach Figur 1 in einer Seitenansicht;
- Figur 3: eine Vorderansicht einer Lackierkabine mit einer Overspray-Abscheidevorrichtung gemäß einem zweiten Ausführungsbeispiel;
- Figur 4: eine Vorderansicht einer Lackierkabine mit einer Overspray-Abscheidevorrichtung gemäß einem dritten Ausführungsbeispiel;
- Figur 5: eine Vorderansicht einer Lackierkabine mit einer Overspray-Abscheidevorrichtung gemäß einem vierten Ausführungsbeispiel, bei welchem Abscheideeinheiten längs zur Lackierkabine angeordnet sind;
- Figur 6: einen Abschnitt der Lackierkabine nach Figur 5 in einer Seitenansicht, wobei noch eine weitere Abwandlung veranschaulicht ist.

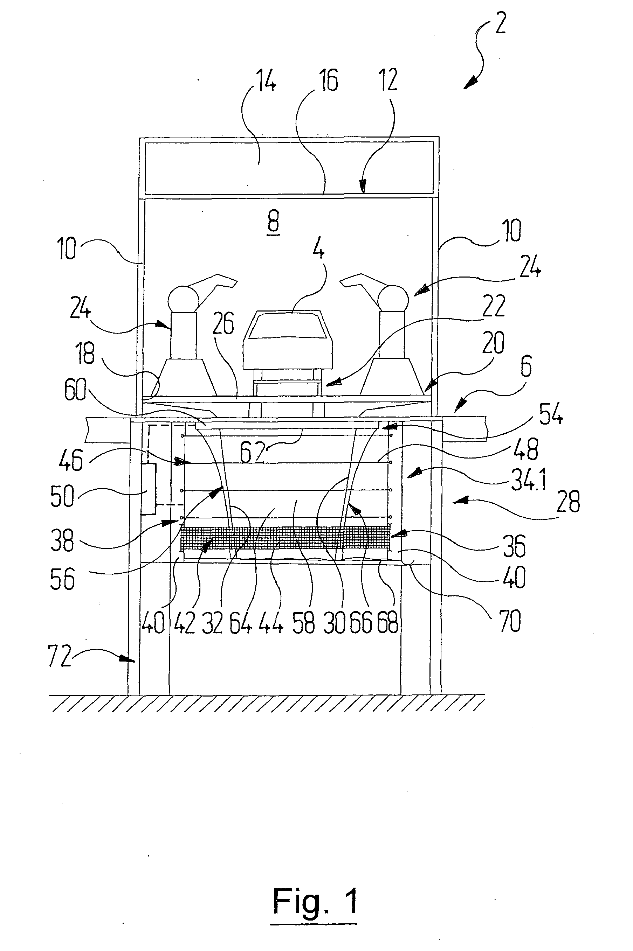

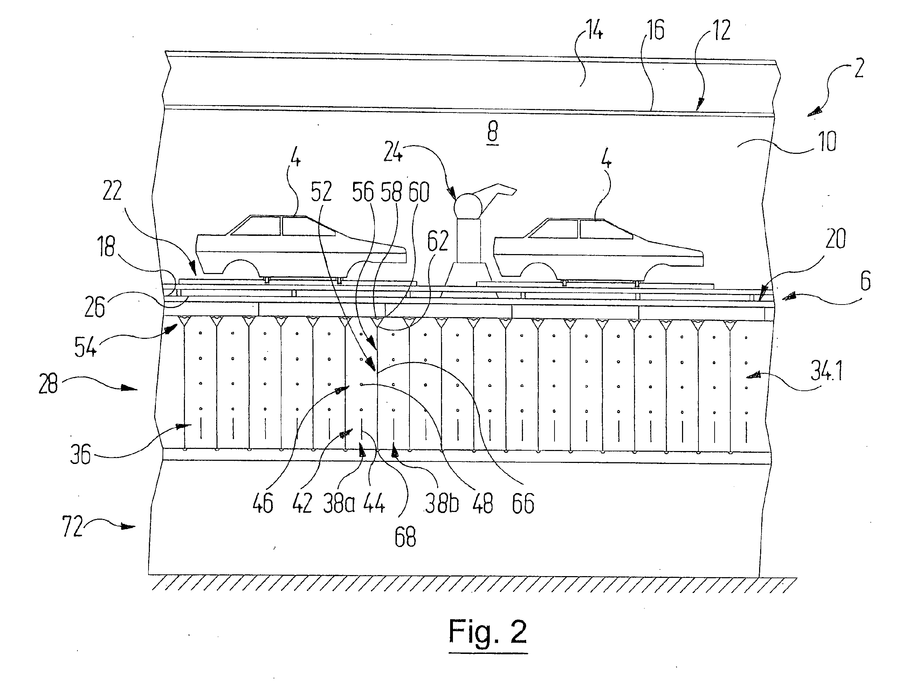

Zunächst wird auf die Figuren 1 und 2 Bezug genommen. Dort ist als Beispiel für eine Beschichtungskabine einer Beschichtungsanlage mit 2 insgesamt eine Lackierkabine bezeichnet, in welcher Fahrzeugkarosserien 4 mit Beschichtungsmaterial in Form von Lack beaufschlagt werden, nachdem sie in der Lackierkabine 2 vorgelagerten, nicht eigens gezeigten Vorbehandlungsstationen z.B. gereinigt und entfettet wurden. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten offen ist. Nach unten hin ist der Lackiertunnel 8 in der Weise offen, dass mit Overspray beladene Kabinenabluft nach unten strömen kann. Die Kabinendecke 12 bildet in üblicher Weise die untere Begrenzung eines Luftzuführraumes 14 und ist als Filterdecke 16 ausgebildet. Über den Luftzuführraum 14 strömt in an und für sich bekannter Art und Weise konditionierte Luft als Kabinenluft von oben in den Lackiertunnel 8 ein, welche beim Durchströmen des Lackiertunnels 8 Overspray aufnimmt und nach unten aus dem Lackiertunnel 8 abführt.

Auf Höhe einer unteren Öffnung 18 des Lackiertunnels 8 ist ein Stahlbau 20 angeordnet, welcher ein an und für sich bekanntes Fördersystem 22 trägt, auf welches hier nicht näher eingegangen wird. Mit diesem können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen, welche vorliegend in Form von Applikationsrobotern 24 veranschaulicht sind und mittels welchen die Fahrzeugkarosserien 4 in an und für sich bekannter Weise mit Lack beschichtet werden können. Die untere Öffnung 18 des Lackiertunnels 8 ist durch einen begehbaren Gitterrost 26 abgedeckt.

Unterhalb der Lackierkabine 2 befindet sich ein Anlagenbereich 28, in welchem die von der Kabinenluft mitgeführten Overspraypartikel von der Kabinenluft getrennt werden. In dem Anlagenbereich 28 wird mit Overspray beladene Kabinenluft mit Hilfe von nach unten konvergierenden Luftleitblechen 30, 32 in Richtung auf und durch eine elektrostatisch arbeitende Abscheidevorrichtung 34.1 hindurch geführt, mittels welcher die Kabinenluft weitgehend von Lack-Overspray befreit wird. Die Luftleitbleche 30, 32 sind in Figur 2 nicht gezeigt.

Die Abscheidevorrichtung 34.1 umfasst eine Elektrodeneinrichtung 36 mit einer Vielzahl von Elektrodeneinheiten 38, von denen in Figur 2 lediglich zwei nebeneinander angeordnete Elektrodeneinheiten 38a und 38b mit Bezugszeichen versehen sind. Jede Elektrodeneinheit 38 umfasst zwei geradlinige und vertikal angeordnete Elektrodenleisten 40, welche nur in Figur 1 zu erkennen sind und in einem unteren Feldabschnitt 42 der Elektrodeneinheit 38 eine Gitterelektrode 44 halten. In einem oberen Koronaabschnitt 46 der Elektrodeneinheit 38 halten die Elektrodenleisten 40 mehrere als Sprühelektrode wirkende Koronadrähte 48. Die Koronadrähte 48 verlaufen in einer durch die Elektrodenleisten 40 vorgegebenen Ebene senkrecht zu diesen und sind in gleichen Abständen zueinander angeordnet.

Die Anzahl der Koronadrähte 48 jeder Elektrodeneinheit 38 und deren Abstand voneinander können abhängig von dem Abscheideverhalten der Overspraypartikel variieren. Beim vorliegenden Ausführungsbeispiel sind vier Koronadrähte 48 je Elektrodeneinheit 38 vorgesehen. Jede Elektrodeneinheit 38 ist mit einem Pol einer Hochspannungsquelle 50 verbunden.

Wie in den Figuren 1 und 2 zu erkennen ist, sind die Elektrodeneinheiten 38 quer zur Längsrichtung der Lackierkabine 2 und parallel zu einander in vertikalen Ebenen angeordnet, wobei zwischen zwei benachbarten Elektrodeneinheiten 38 ein Zwischenraum 52 verbleibt. In Figur 2 ist lediglich der Zwischenraum 52 zwischen den benachbarten Elektrodeneinheiten 38a und 38b mit einem Bezugszeichen versehen.

Die Abscheidevorrichtung 34.1 umfasst außerdem eine Einrichtung 54, mittels welcher Abscheidemittel in Form von frei fallenden Abscheidevorhängen 56 aus einem Abscheidematerial 58 erzeugt werden können. Dabei ist jeweils etwa mittig zwischen und parallel zu zwei benachbarten Elektrodeneinheiten 38 ein solcher Abscheidevorhang 56 ausgebildet.

Ein solcher frei fallender Abscheidevorhang 56 kann, muss jedoch nicht, ein zusammenhängender Materialvorhang oder Materialfilm sein. Vielmehr soll der Begriff Vorhang eine weitgehend gleichmäßige Verteilung von Abscheidematerial 58 über die von dem Abscheidematerial 58 abgedeckte Wirkfläche widerspiegeln, wobei jedoch durchaus lokale Unterschiede bezogen auf das Abscheidematerial 58 und dessen Verteilung in dem Abscheidevorhang 56 auftreten können, ohne Aufnahmewirkung des Abscheidevorhangs 56 für Lack-Overspray als solche zu beeinflussen.

Beim vorliegenden Ausführungsbeispiel sind hierfür mehrere Abgaberinnen 60 vorhanden, von denen jede jeweils eine Abgabeeinheit der Einrichtung 54 bildet auf einem Höhenniveau zwischen den Elektrodeneinheiten 38 und der unteren Öffnung 18 des Lackiertunnels 8 und dabei etwa mittig zwischen und parallel zu zwei benachbarten Elektrodeneinheiten 38a, 38b angeordnet sind. Dies ist in Figur 2 gut zu erkennen.

Jede Abgaberinne 60 weist in Längsrichtung einen unteren Austrittsschlitz 62 auf, über welchen Abscheidematerial 58 nach unten austreten kann. Als Abscheidematerialien 58 können sowohl Flüssigkeiten als auch Feststoffe oder Gemische daraus verwendet werden. Bei einem flüssigen Abscheidematerial 58, wie beispielsweise Wasser, wird beim vorliegenden Ausführungsbeispiel ein zusammenhängender Flüssigkeitsfilm erzeugt. Im Falle eines festen Abscheidematerials 58, wie Steinmehl oder ein Pulver oder Puder, rieselt dieses aus den Abgaberinnen 60 nach unten heraus.

Beim vorliegenden Ausführungsbeispiel ist das Abscheidematerial 58 eine Abscheideflüssigkeit 64 in Form von Wasser. Das Wasser wird den Abgaberinnen 60 über eine nicht eigens gezeigte Versorgungseinrichtung zugeführt und strömt aus diesen als weitgehend zusammenhängender Wasservorhang 66 aus. Aufgrund der Eigenschaften des Wassers divergiert der Wasservorhang 66 von der Seite betrachtet nach unten hin. Die Luftleitbleche 30, 32 folgen zumindest grob dieser Randkonturlinie des Wasservorhangs 66, so dass die aus dem Lackiertunnel 8 kommenden Kabinenluft an den Wasservorhängen 66 entlang geführt wird.

Wenn ein anderes Abscheidematerial 58 als Wasser verwendet wird und ein anders konturierter Abscheidevorhang 56 entsteht, sind die Luftleitbleche 30, 32 entsprechend daran angepasst.

Die Abscheiderinnen 60 sind nun ebenfalls mit der Hochspannungsquelle 50 verbunden, liegen jedoch auf Massepotential, wodurch auch das Abscheidematerial 58, das durch die Abgaberinnen 60 strömt oder rieselt, auf Massepotential gelegt ist.

Die Abscheidevorhänge 56 fallen in Auffangrinnen 68, von denen jeweils eine vertikal unterhalb einer der Abgaberinnen 60 und am unteren Ende der Elektrodeneinheiten 38 angeordnet ist. Die Auffangrinnen 68 münden alle in einer Sammelrinne 70, welche sich wieder in Längsrichtung der Lackierkabine 2 erstreckt und über welche das nun mit Overspray beladene Abscheidematerial 56 aus allen Auffangrinnen 68 abgeführt wird. Die Auffangrinnen 68 und die Sammelrinne 70 sind derart geneigt, dass das Abscheidematerial 58 weitgehend ohne weitere Maßnahmen durch die Schwerkraft durch die Rinnen gefördert wird.

Nachdem die Kabinenluft die Abscheidevorrichtung 34.1 passiert hat, gelangt sie in einen Konditionierbereich 72, in welchem gegebenenfalls noch ein oder mehrere weitere Filter vorhanden sind, um mögliche Oversprayreste oder sonstige Verunreinigungen aus der Kabinenluft zu entfernen. Die gereinigte Kabinenluft wird so konditioniert, dass sie in einem Kreislauf wieder zum Luftzuführraum 14 geführt werden kann, von wo sie wieder in den Lackiertunnel 8 einströmt.

Die oben erläuterte Lackierkabine 2 arbeitet nun wie folgt:

Wenn die Fahrzeugkarosserien 4 im Lackiertunnel 8 lackiert werden, wird die dort befindliche Kabinenluft mit Lack-Overspraypartikeln beladen. Diese können noch flüssig und/oder klebrig, aber auch schon mehr oder weniger fest sein. Die mit Lack-Overspray beladene Kabinenabluft strömt durch die untere Öffnung 18 des Lackiertunnels 8 zur Abscheidevorrichtung 34.1. Dort wird diese Luft durch die Luftleitbleche 30, 32 entlang der Wasservorhänge 66 zwischen den Elektrodeneinheiten 38 nach unten geführt.

An den Koronadrähten 48 der Elektrodeneinheiten 38 kommt es in an und für sich bekannter Weise zu Koronaentladungen, durch welche die Overspraypartikel in der vorbeiströmenden Kabinenabluft effektiv ionisiert werden.

Die ionisierten Overspraypartikel passieren die auf Massepotential liegenden Wasservorhänge 66 und die dazwischen verlaufende Gitterelektroden 44 in den Feldabschnitten 42 der Elektrodeneinheiten 38. Auf Grund des zwischen den Elektrodeneinheiten 38 und den Wasservorhängen 66 ausgebildeten elektrischen Feldes wandern die ionisierten Overspraypartikel zu den Wasservorhängen 66, welche nun Overspray aufnehmen und nach unten in die jeweils zugehörige Auffangrinne 68 abführen, über welche das nun mit Overspray beladene Wasser zur Sammelrinne 70 fließt. Auf diese Weise bildet somit jede Elektrodeneinheit 38 mit einer der Abgaberinnen 60 eine Abscheideeinheit für Overspray.

Von der Sammelrinne 70 kann das mit Overspray beladene Wasser dann einem Reinigungs- und Aufbereitungsprozess zugeführt werden, in welchem es in an und für sich bekannter Weise von dem Lack-Overspray befreit wird. Sodann kann das gereinigte und aufbereitete Wasser in einem Kreislauf wieder den Abgaberinnen 60 zugeführt werden.

Der größte Teil der ionisierten Overspraypartikel scheidet sich bereits auf Höhe des Koronaabschnitts 46 der Elektrodeneinheiten 38 in dem Wasservorhang 66 ab. Das zwischen den Koronadrähten 48 und einem der Wasservorhänge 66 vorhandene elektrische Feld ist jedoch inhomogener als das elektrische Feld im Bereich der Gitterelektrode 44, weshalb dort ein gerichteteres Abscheiden der ionisierten Overspraypartikel erfolgt. Hierdurch werden auch die Overspraypartikel, welche den Koronaabschnitt 46 passiert haben, im Feldabschnitt 42 effektiv abgeschieden.

Die beim Durchgang durch die Abscheidevorrichtung 34.1 von Overspray befreite und so gereinigte Kabinenluft tritt in den Konditionierbereich 72 ein, in dem sie entsprechend konditioniert wird, und gelangt über den Luftzuführraum 14 wieder in den Lackiertunnel 8.

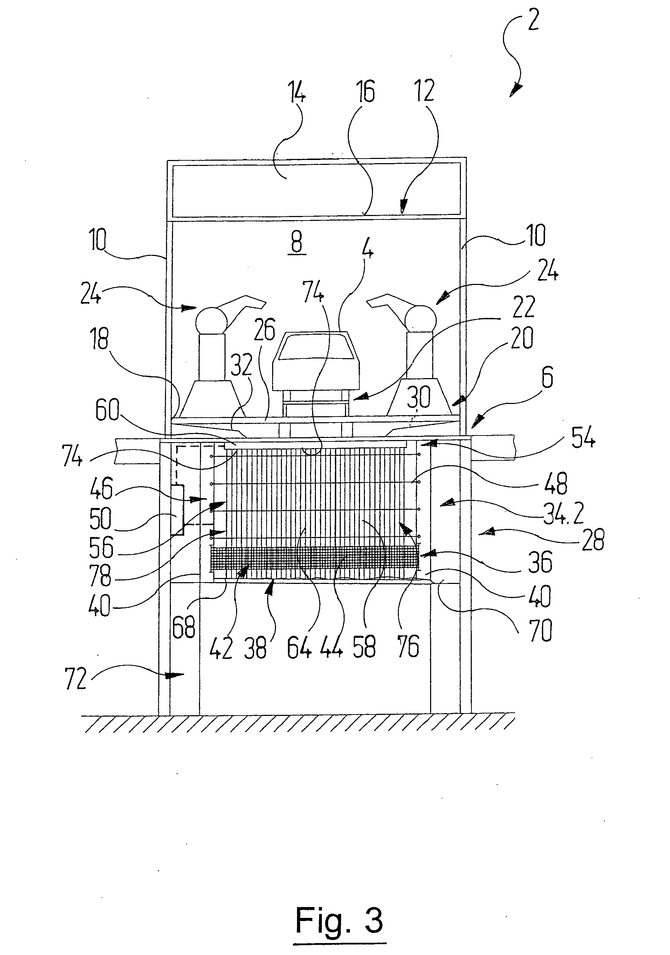

In Figur 3 ist eine Lackierkabine 2 gezeigt, bei welcher als zweites Ausführungsbeispiel eine abgewandelte Abscheidevorrichtung 34.2 vorhanden ist. Bei dieser tragen diejenigen Komponenten, welche den Komponenten der Abscheidevorrichtung 34.1 entsprechen, dieselben Bezugszeichen.

Im Unterschied zur Abscheidevorrichtung 34.1 weisen die Abgaberinnen 60 keinen Austrittsschlitz 62 auf. Vielmehr sind die Abgaberinnen 60 am Boden in Längsrichtung mit einer oder mehrerer Reihen von Austrittslöchern 74 versehen, durch welche Wasser als Einzelstrahlen 76 austritt. Alle Einzelstrahlen 76 bilden dabei einen nicht zusammenhängenden Wasservorhang 78.

Wenn die Austrittslöcher 74 in mehreren Reihen vorhanden sind, können die Austrittslöcher 74 gegeneinander versetzt angeordnet sein; auf diese Weise kann ein dichterer Wasservorhang 78 gebildet werden.

Die Luftleitbleche 30, 32 reichen nicht in die Abgabevorrichtung 34.2 hinein, sondern enden kurz oberhalb des Höhenniveaus der Abgaberinnen 60. Da der Wasservorhang 78 nicht nach unten hin konvergiert, muss die Kabinenluft keiner Außenkontur der Wasservorhangs 78 folgen. Die Luftleitbleche 30 und 32 führen die Kabinenluft lediglich etwas zur Mitte der Elektrodeneinheiten 38 zusammen.

Die Abscheidevorrichtung 34.2 spiegelt somit das oben erwähnte Konzept wider, bei welchem der Abscheidevorhang 56 nicht als zusammenhängender Materialvorhang oder Materialfilm ausgebildet ist.

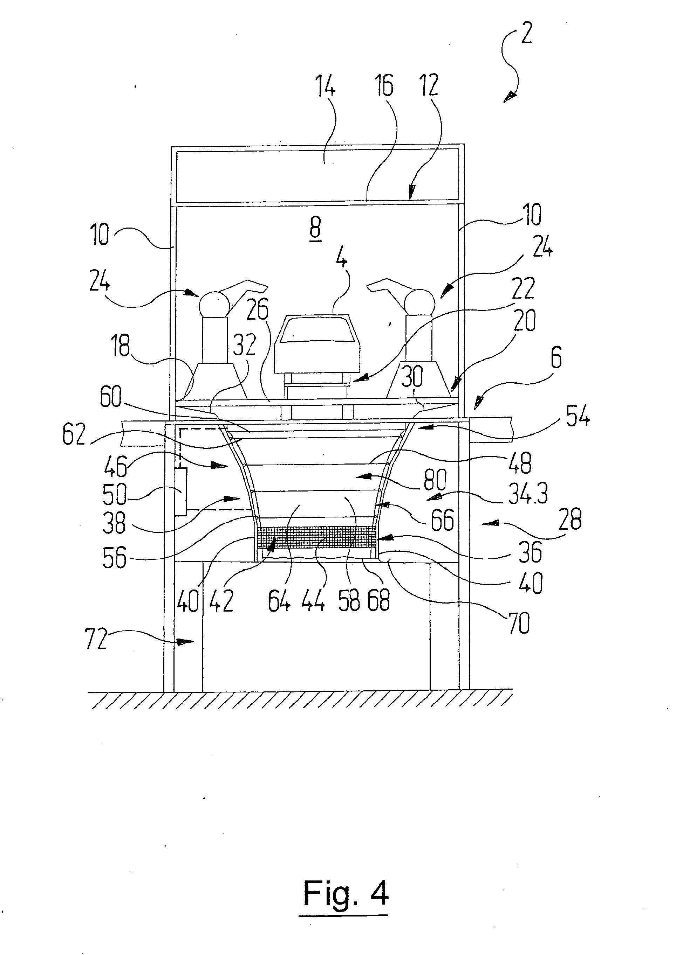

In Figur 4 ist eine Lackierkabine 2 mit einer nochmals abgewandelten Abscheidevorrichtung 34.3 gezeigt, bei welcher wieder bereits erläuterte Komponenten dieselben Bezugszeichen tragen.

Bei der Abscheidevorrichtung 34.3 sind die Abgaberinnen 60 mit Austrittsschlitz 62 vorhanden, so dass wieder jeweils ein zusammenhängender Wasservorhang 66 erzeugt wird. Die Elektrodenleisten 40 verlaufen jedoch nicht geradlinig, sondern gekrümmt, und folgen wie die Luftleitbleche 30, 32 der Randkontur des Wasservorhangs 66. Im Zusammenspiel mit den Luftleitblechen 30, 32 kann so ein Abscheideraum 80 begrenzt werden, bei dem Lücken zwischen den Luftleitblechen 30, 32, die bei der Abscheidvorrichtung 34.1 im Bereich der Elektrodeneinheiten 38 vorhanden sind, geschlossen sind. Die Begrenzung des Abscheideraums 80 kann fluiddicht sein, muss dies jedoch nicht.

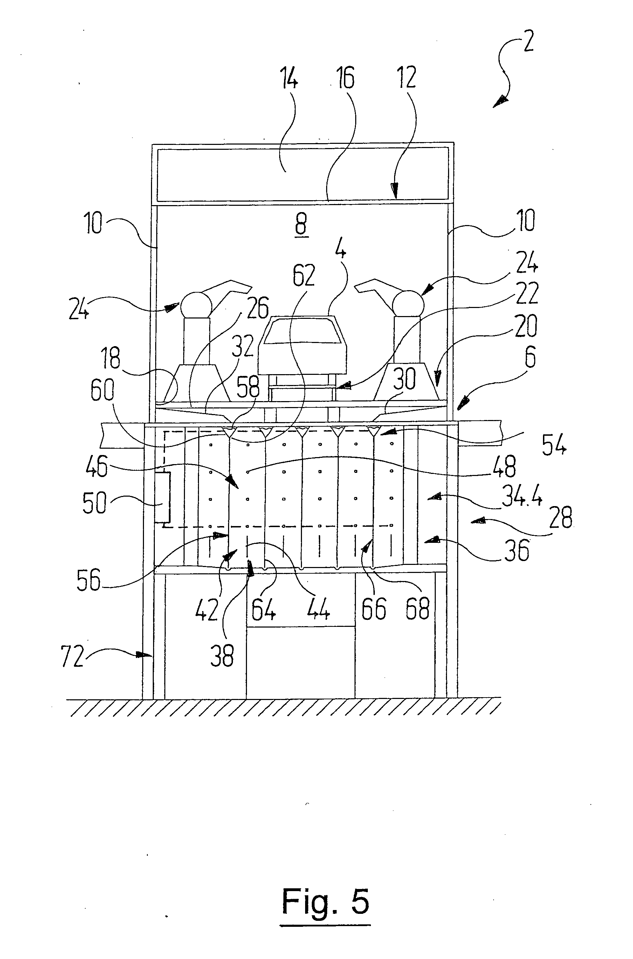

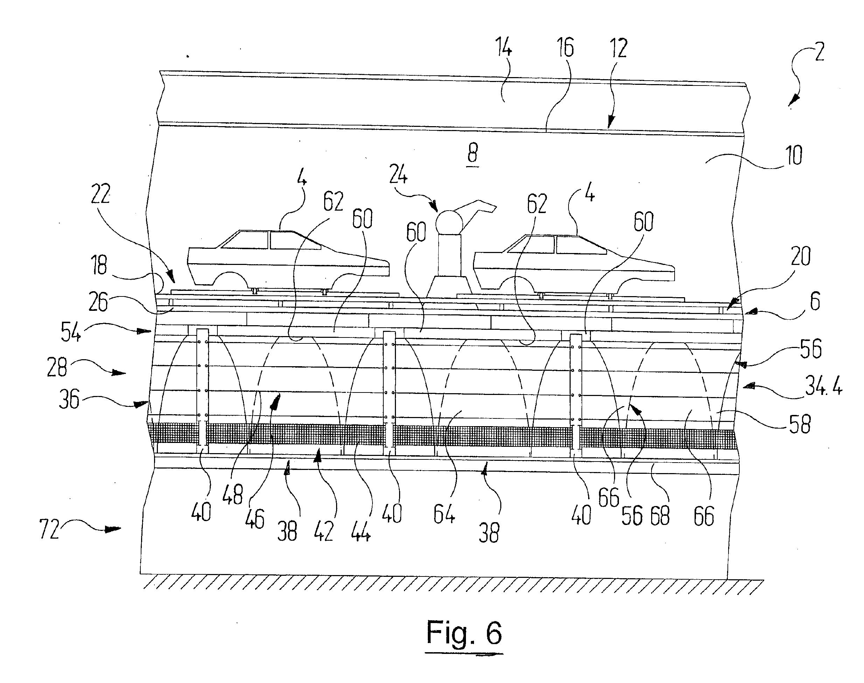

In den Figuren 5 und 6 ist eine Lackierkabine 2 mit einer nochmals abgewandelten Abscheidevorrichtung 34.4 gezeigt, bei welcher wiederum bereits erläuterte Komponenten dieselben Bezugszeichen tragen.

Bei der Abscheidevorrichtung 34.4 sind die Elektrodeneinheiten 38 der Elektrodeneinrichtung 36 und die Abgaberinnen 60 nicht quer zur Längsrichtung der Lackierkabine 2, sondern parallel dazu ausgerichtet. Dabei sind jeweils mehrere Elektrodeneinheiten 38 hintereinander angeordnet. In diesem Fall erstrecken sich also auch die Wasservorhänge 66 parallel zur Längsrichtung der Lackierkabine 2.

Bei dieser Anordnung gibt es keine Sammelrinne 70, vielmehr verlaufen alle Auffangrinnen 68 unterhalb der Abgaberinnen 60 in Längsrichtung der Lackierkabine zu einer von deren Stirnseiten, wo das mit Overspray beladene Wasser zur weiteren Aufbereitung abgeführt wird.

Bei einer weiteren Abwandlung sind die Abgaberinnen 60 bei zwei benachbarten Reihen von Abgaberinnen 60 versetzt zueinander angeordnet. Dies ist in Figur 6 durch gestrichelt gezeigte Wasservorhänge 66 veranschaulicht, die gegenüber den mit durchgezogenen Linien gezeigten Wasservorhängen 66 versetzt sind. Auf diese Weise können die Wasservorhänge 66 in Richtung quer zur Längsrichtung der Lackierkabine 2 weitgehend lückenlos überlappen, so dass in seitliche Richtung strömende und noch mit Overspray beladene Kabinenluft nicht aus der Abscheidevorrichtung 34.4 nach außen gelangen kann.

Bei allen oben erläuterten Ausführungsbeispielen wird Wasser als Abscheidematerial 58 verwendet. Das Abscheidematerial 58 soll elektrisch leitfähig sein. Über den Leitwert des gewählten Abscheidematerials 58 können die Parameter im Hinblick auf das elektrische Feld zwischen einer Elektrodeneinheit 38 und einem benachbarten Abscheidevorhang 56 eingestellt werden.

Wenn Feststoffe als Abscheidematerial 58 verwendet werden, können diese bei einer nicht eigens gezeigten Abwandlung gegenpolig zu den Overspraypartikeln ionisiert werden.

## Patentansprüche

1. Vorrichtung zum Abscheiden von Lack-Overspray aus der mit Overspray beladenen Kabinenabluft von Lackieranlagen mit
a) Abscheidemitteln, an welchen die Kabinenabluft entlang führbar ist und welche auf dem Potential eines Pols einer Hochspannungsquelle (50) liegen;
b) einer im Luftstrom angeordneten Elektrodeneinrichtung (36), welche mit dem anderen Pol der Hochspannungsquelle (50) verbunden ist,
**dadurch gekennzeichnet, dass**
c) eine Einrichtung (54) vorhanden ist, mittels welcher wenigstens ein frei fallender Abscheidevorhang (56) aus einem Abscheidematerial (58) erzeugbar ist, der als Abscheidemittel dient und mit der Elektrodeneinrichtung zusammenarbeitet.

2. Abscheidevorrichtung nach Anspruch 1, **dadurch gekennzeichnet, dass** ein oder mehrere Abgabeeinheiten (60) vorhanden sind, über welche das Abscheidematerial (58) jeweils in Form eines Abscheidevorhangs (56) abgebbar ist.

3. Abscheidevorrichtung nach Anspruch 2, **dadurch gekennzeichnet, dass** die eine oder die mehreren Abgabeeinheiten (60) als Abgaberinne (60) ausgebildet sind, welchen das Abgabematerial (58) zuführbar ist.

4. Abscheidevorrichtung nach Anspruch 3, **dadurch gekennzeichnet, dass** jede Abgaberinne (60) einen Austritts-Längsschlitz (62) und/oder eine Mehrzahl von Austrittslöchern (74) für das Abscheidematerial (58) aufweist.

5. Abscheidevorrichtung nach einem der Ansprüche 1 bis 4, **dadurch gekennzeichnet, dass** Luftleitbleche (30, 32) vorhanden sind, mittels welchen die Kabinenluft an dem wenigstens einen Abscheidevorhang (56) entlang leitbar sind.

6. Abscheidevorrichtung nach Anspruch 5, **dadurch gekennzeichnet, dass** die Luftleitbleche (30, 32) weitgehend dem Verlauf der seitlichen Kontur des wenigstens einen Abscheidevorhangs (56) folgen.

7. Anlage zum Beschichten von Gegenständen mit
a) einer Beschichtungskabine (2), in welcher die Gegenstände (4) mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung (34), welcher diese Kabinenluft zuführbar ist und wo zumindest ein Großteil des Oversprays aus der Kabinenluft abgeschieden wird,
**dadurch gekennzeichnet, dass**
c) die Abscheidevorrichtung (34) nach einem der Ansprüche 1 bis 6 ausgebildet ist.

8. Anlage nach Anspruch 7, **dadurch gekennzeichnet, dass** eine Mehrzahl von Abscheideeinheiten (38, 60) vorhanden sind, die jeweils eine Elektrodeneinheit (38) und eine Abgabeeinheit (60) umfassen, wobei die Abscheideeinheiten (38, 60) quer zur Längsrichtung der Beschichtungskabine (2) oder parallel zur Längsrichtung der Beschichtungskabine (2) angeordnet sind.

9. Anlage nach Anspruch 8, **dadurch gekennzeichnet, dass** die Abscheideeinheiten (38, 60) versetzt zueinander angeordnet sind.
